# DEMANDE DE BREVET EUROPEEN

(11) **EP 3 664 109 A1**
(43) Date de publication de la demande: **10.06.2020**
(21) Numéro de dépôt: 19212959.1
(22) Date de dépôt: 02.12.2019
(51) Int. Cl.: H01F 27/30, H01F 27/32, H02M 7/06, H02M 7/08

(54) **CONVERTISSEUR AC/DC**

(30) Priorité: 04.12.2018 FR 1872279
(71) Demandeur: Thales, 92400 Courbevoie (FR)
(72) Inventeur: LOUVIOT, Rémi, 78400 CHATOU (FR); BIAUJAUD, Rémy, 78400 CHATOU (FR); BOUFFAY, Jean-Marc, 78400 CHATOU (FR); DUMONT, Philippe, 78400 CHATOU (FR); TOUZET, ERIC, 78400 CHATOU (FR)
(74) Mandataire: Derval, Estelle

(57) **Abrégé**

Convertisseur AC/DC (1) comprenant une entrée du convertisseur AC/DC destinée à recevoir une tension alternative d'entrée et à la transformer en une tension continue, le convertisseur AC/DC (1) comprenant un transformateur (2) destiné à recevoir la tension alternative triphasée d'entrée et à délivrer deux tensions alternatives triphasées de sortie sur deux secondaires respectifs (40, 50), le convertisseur (1) comprenant un ensemble de deux ponts redresseurs (41, 51), chaque secondaire (40, 50) étant relié en entrée d'un des deux ponts redresseurs (41, 51) de l'ensemble, chaque pont redresseur (41, 51) de l'ensemble de ponts redresseurs comprenant une première sortie reliée à une borne de sortie du convertisseur AC/DC par une inductance d'interphase (I), l'inductance d'interphase (I) comprenant un circuit magnétique (60) comprenant deux branches (B1, B2) sensiblement parallèles et deux enroulements, chaque enroulement étant enroulé autour d'une des deux branches (B1, B2) et étant maintenu à distance du circuit magnétique (60) en tout point de l'enroulement au moyen d'un ensemble d'au moins un bloc de maintien en un matériau ayant une dureté shore A inférieure ou égale à 50 et étant distants en tout point des branches (B1, B2).

## Description

L'invention concerne le domaine des convertisseurs alternatifs continu ou AC/DC du type comprenant un transformateur, par exemple un autotransformateur, comprenant deux secondaires triphasés reliés à deux ponts redresseurs triphasés dont au moins une sortie est moyennée par une inductance d'interphase comprenant deux bobines d'interphase. Chaque bobine d'interphase est reliée d'une part à une sortie d'un des ponts redresseurs et d'autre part à une borne de sortie du convertisseur. Le convertisseur AC/DC délivre une tension de sortie du convertisseur entre deux bornes de sortie du convertisseur.

Les tensions alternatives délivrées par les deux secondaires triphasés du transformateur sont déphasées. Le rôle d'une inductance d'interphase est de lisser la tension délivrée en sortie d'un pont redresseur auquel elle est reliée afin de baisser l'ondulation résiduelle.

L'inductance d'interphase comprend au moins un circuit magnétique autour duquel sont enroulés des enroulements conducteurs électriques pour former les deux bobines d'interphase. Le circuit magnétique et les enroulements sont classiquement assemblés par un vernis d'assemblage et de protection dans lequel ils sont tous noyés. Les inductances d'interphase sont reliées mécaniquement et électriquement aux deux ponts redresseurs et à une borne de sortie du convertisseur AC/DC via les enroulements. Le vernis d'assemblage présente l'avantage de réaliser une double fonction d'assemblage et de protection des enroulements vis-à-vis des conditions environnementales (corrosion) et des chocs pouvant avoir lieu lors de la manutention de l'inductance d'interphase notamment lorsque l'on vient la relier mécaniquement et électriquement aux ponts redresseurs et à la sortie du convertisseur AC/DC.

Ce type de convertisseurs AC/ DC a des applications embarquées notamment dans l'aéronautique. Or, un des inconvénients majeur de ce type de convertisseurs est le bruit acoustique qu'il génère pouvant aller jusqu'à 70 dB voire 80 dB qui peut être très gênant pour les passagers lorsqu'il est installé à proximité des passagers ou pour les pilotes lorsqu'il est installé à proximité de la cabine du pilotage.

En effet, le fonctionnement du convertisseur AC/DC entraîne un fort niveau de saturation du circuit magnétique. Ce niveau de saturation, à travers le phénomène de magnétostriction, est responsable de forts niveaux de vibrations du circuit magnétique qui sont transmises, via le vernis aux enroulements puis, via les enroulements, aux autres éléments du convertisseur AC/DC et aux équipements auquel est relié le convertisseur AC/DC qui deviennent émetteurs de forts niveaux de bruit à des fréquences acoustiques élevées, de l'ordre de multiples de la fréquence de la tension alternative injectée en entrée du convertisseur AC/DC qui est classiquement de 400 Hz (fréquence fixe) ou comprise entre 360-800 Hz lorsque la fréquence est variable.

Une solution actuelle pour réduire le bruit acoustique du convertisseur AC/DC est de découpler totalement, en vibration, le bloc formé par les enroulements et le circuit magnétique noyés dans le vernis du reste du convertisseur AC/DC, en le reliant mécaniquement au reste du convertisseur AC/DC au moyen de plots amortisseurs et en le reliant électriquement au reste du convertisseur AC/DC au moyen de tresses électriques. Cette solution présente le défaut d'être coûteuse (coût des plots, des tresses) et encombrante.

L'autre solution est une solution palliative au bruit acoustique de la self de mode commun par l'utilisation typique des méthodes de capotage acoustique (absorption, amortissement, réduction des fuites). Cette solution a le défaut de l'encombrement car les solutions de capotage représentent un surplus de volume, de la masse ajoutée également.

Un but de l'invention est de limiter au moins un des inconvénients précités.

A cet effet, l'invention a pour objet un convertisseur AC/DC comprenant une entrée du convertisseur AC/DC destinée à recevoir une tension alternative triphasée d'entrée et à la transformer en une tension continue, le convertisseur AC/DC comprenant un transformateur destiné à recevoir la tension alternative triphasée d'entrée et à délivrer deux tensions alternatives triphasées de sortie sur deux secondaires respectifs, le convertisseur comprenant un ensemble de deux ponts redresseurs, chaque secondaire étant relié en entrée d'un des deux ponts redresseurs de l'ensemble, chaque pont redresseur de l'ensemble de ponts redresseurs comprenant une première sortie reliée à une borne de sortie du convertisseur AC/DC par une inductance d'interphase, l'inductance d'interphase comprenant un circuit magnétique comprenant deux branches sensiblement parallèles et deux enroulements, chaque enroulement étant enroulé autour d'une branche des deux branches et étant maintenu à distance du circuit magnétique, en tout point de l'enroulement au moyen d'un ensemble d'au moins un bloc de maintien en un matériau ayant une dureté shore A inférieure ou égale à 50.

Autrement dit, les enroulements sont distants, en tout point, des deux branches.

Avantageusement, l'enroulement est fixé à la branche au moyen de l'ensemble d'au moins un bloc de maintien.

Avantageusement, l'enroulement est fixé à la branche uniquement au moyen de l'ensemble d'au moins un bloc de maintien.

Avantageusement, le matériau est une colle.

L'invention se rapporte également à un procédé de fabrication d'un convertisseur AC/DC selon l'invention, comprenant les étapes suivantes pour chaque enroulement :
- une étape d'enroulement pour former l'enroulement autour de la branche de sorte que l'enroulement soit apte à être maintenu à distance du circuit magnétique en tout point de l'enroulement,
- une étape de formation de l'ensemble d'au moins un bloc de maintien fixé au circuit magnétique,
- une étape de disposition de l'enroulement par rapport au du circuit magnétique de sorte que l'ensemble d'au moins un bloc de maintien maintienne l'enroulement à distance du circuit magnétique en tout point de l'enroulement.

Avantageusement, le matériau est une colle.

Dans un premier mode de réalisation, le procédé comprend une étape de positionnement de l'enroulement et du circuit magnétique dans une position relative dans laquelle l'enroulement est située à distance du circuit magnétique en tout point de l'enroulement, suivie d'une étape d'application d'une colle entre l'enroulement et la branche et une étape de polymérisation de la colle de sorte à former l'ensemble d'au moins un bloc de maintien.

Dans un deuxième mode de réalisation, le procédé comprend une étape d'injection du matériau dans un moule entourant le circuit magnétique et définissant au moins un volume libre dans lequel est destiné à se trouver l'ensemble d'au moins un bloc de maintien, l'étape d'injection étant suivie d'une étape de retrait du moule suivie de l'étape d'enroulement.

L'invention sera mieux comprise et d'autres avantages apparaîtront à la lecture de la description détaillée d'un mode de réalisation donné à titre d'exemple, description illustrée par le dessin joint dans lequel :
[Fig.1] la figure 1 représente un schéma électrique d'un exemple de convertisseur AC/DC selon l'invention,
[Fig.2a] la figure 2a représente schématiquement un exemple d'inductance d'interphase d'un convertisseur AC/DC selon l'invention,
[Fig.2b] la figure 2b représente schématiquement en coupe selon un plan de symétrie des deux branches du circuit magnétique de l'inductance d'interphase,
[Fig.2c] la figure 2c représente schématiquement en vue de côté l'inductance de la figure 2a, vue depuis le point de vue représenté par l'œil sur la figure 2b,
[Fig.3] la figure 3 représente schématiquement dans un plan perpendiculaire à l'axe longitudinal d'une branche du circuit magnétique, le volume délimitant l'enroulement entouré autour de cette branche,
[Fig.4] la figure 4 représente schématiquement le bruit généré par une inductance d'interphase d'un convertisseur AC/DC de l'art antérieur (en trait continu) et par une inductance d'interphase d'un convertisseur AC/DC selon l'invention (en traits pointillés),
[Fig.5] la figure 5 représente schématiquement un autre exemple de convertisseur AC/DC selon l'invention,
[Fig.6] la figure 6, représente schématiquement les étapes d'un premier mode de réalisation du procédé selon l'invention,
[Fig.7] la figure 7 représente schématiquement les étapes d'un deuxième mode de réalisation du procédé selon l'invention,
[Fig.8] la figure 8 représente schématiquement un noyau magnétique muni de blocs de colle obtenu lors de la mise en œuvre du procédé de la figure 7,
[Fig.9] la figure 9 représente schématiquement un moule utilisé dans le procédé de la figure 7.

Par souci de clarté, les mêmes éléments porteront les mêmes repères dans les différentes figures.

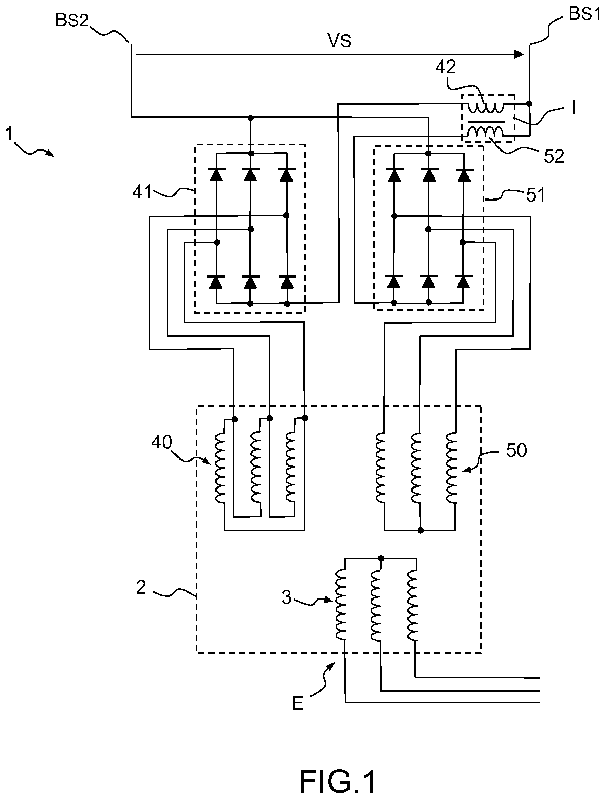

L'invention se rapporte à un convertisseur AC/DC 1 dont un exemple est représenté sur la figure 1, comprenant une entrée E destinée à recevoir une tension alternative d'entrée et à la transformer en une tension continue VS. Le convertisseur AC/DC 1 comprend un transformateur 2 dont l'entrée triphasée, est l'entrée E du primaire 3 du transformateur 2. Le transformateur 2 délivre une première tension alternative de sortie sur un premier secondaire 40 triphasée du transformateur et une deuxième tension alternative de sortie sur un deuxième secondaire 50 triphasé du transformateur. Le convertisseur AC/DC 1 comprend deux ponts redresseurs 41, 51 sous forme de ponts de diodes et une inductance d'interphase I. Chaque secondaire 40, 50 est relié en entrée d'un des deux ponts redresseurs 41, 51.

Chaque pont redresseur 41, 51 comprend une première sortie reliée à l'inductance d'interphase. L'inductance d'interphase 1 est en outre reliée à une borne BS1 de sortie du convertisseur 1.

L'inductance d'interphase I comprend deux bobines 42, 52. La première sortie de chaque redresseur 41, 51 est reliée à une borne d'une des bobines 42, 52 de l'inductance d'interphase I, l'autre borne de la bobine 42, 52 est reliée à la borne de sortie BS1 du convertisseur 1.

La tension de sortie du convertisseur AC/DC est délivrée entre la borne de BS1 et une autre borne de sortie du convertisseur BS2.

Dans l'exemple non limitatif de la figure 1, les deuxièmes sorties des deux ponts redresseurs sont reliées à l'autre borne de sortie BS2 du convertisseur.

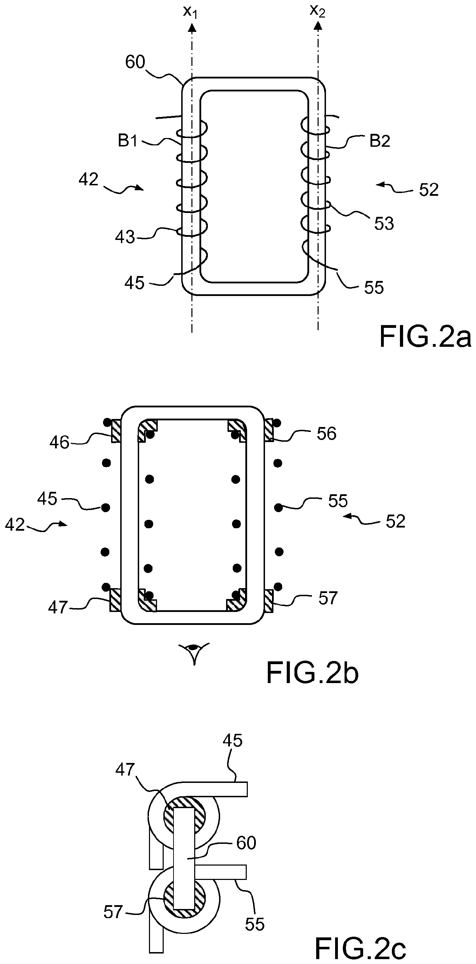

Comme visible sur la figure 2a, l'inductance d'interphase I comprend un noyau magnétique commun définissant un circuit magnétique commun 60 et des enroulements conducteurs 43, 53 enroulés autour de ce noyau commun 60 de sorte à former les deux bobines 42 et 52.

Le circuit magnétique 60 est classiquement réalisé à base de ferrite ou d'au moins un feuillard d'un matériau ferromagnétique. Le circuit magnétique peut être du type enroulé, il comprend alors au moins un feuillard, ou du type empilé, il comprend alors un empilement de feuillards.

Les deux bobines d'interphase sont montées en parallèle et couplées pour former une inductance mutuelle.

Chaque enroulement 43, 53 est obtenu par l'enroulement d'un élément allongé conducteur 45, 55 visible sur la figure 2a, autour d'une branche B1, B2 du circuit magnétique commun 60.

Chaque élément allongé conducteur 45, 55 est par exemple réalisé en cuivre ou en aluminium.

Les deux branches B1 et B2 sont des branches parallèles d'un circuit magnétique 60 fermé. Chaque branche B1, B2 s'étend longitudinalement selon un axe longitudinal de la branche x1, x2. Les axes x1 et x2 sont parallèles. Comme visible sur la figure 2a, chaque élément allongé conducteur 45, 55 est enroulé autour de sa branche B1 ou B2 c'est-à-dire autour de l'axe longitudinal x1 ou x2 de la branche B1, B2. L'enroulement 43, 53 est allongé selon l'axe longitudinal de la branche correspondante B1 ou B2. Autrement dit, chaque enroulement 43, 53 comprend plusieurs spires adjacentes deux à deux selon l'axe x1 ou x2.

Selon l'invention, comme visible sur la figure 2b, les enroulements 43, 53 sont montés sur le circuit magnétique commun 60 au moyen d'un ensemble d'au moins un bloc 46, 47, 56, 57 d'un matériau ayant une dureté shore A inférieure ou égale à 50.

Le matériau est par exemple une colle ou adhésif. La dureté shore est alors la dureté de la colle après polymérisation de la colle.

Avantageusement la dureté shore A est comprise entre 20 et 50.

Le matériau est par exemple un élastomère de silicone mono composant ou un silicone alcoxy bi composant.

Selon l'invention, comme représenté sur la figure 2c représentant une vue de côté de l'inductance d'interphase depuis l'œil représenté sur la figure 2b, l'enroulement 43, 53 est distant, en tout point de l'enroulement 43, 53, du circuit magnétique 60 et notamment de la branche B1, B2 autour de laquelle il est formé. Autrement dit, chaque enroulement 43, 53 entoure une des branches B1 ou B2 à distance de la branche, c'est-à-dire sans être contigu à la branche.

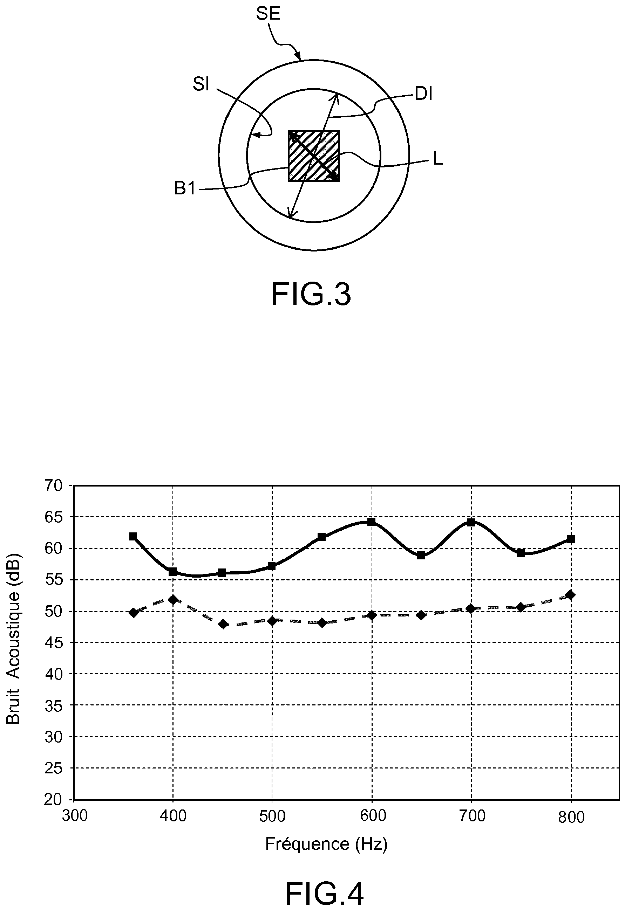

Comme représenté sur la figure 3, chaque enroulement est délimité par un volume tubulaire V dont l'axe est sensiblement parallèle ou confondu avec l'axe de la branche autour duquel est enroulé l'enroulement. Ce volume tubulaire comprend une surface interne SI tournée vers la branche et une surface externe SE tournée vers l'extérieur. Dans chaque plan perpendiculaire à l'axe longitudinal de la branche B1 correspondante et passant par la branche B1, la surface interne SI du tube délimitant l'enroulement entoure la branche B1 et est en tout point situé à distance de la branche B1. Autrement dit, dans ce plan, le diamètre DI de la surface interne est supérieur à la dimension maximale de la branche B1 dans ce plan. Cette dimension maximale est, par exemple, la longueur L de la diagonale du carré lorsque la branche B1 présente une section externe carrée ou de la plus grande diagonale dans le cas d'une section rectangulaire ou le diamètre de la section externe dans le cas d'une section ronde.

Au moins un bloc d'un matériau à faible dureté shore est interposé entre chaque enroulement 43, 53 et la branche B1, B2 autour de laquelle il est formé. Ce matériau est appelé matériau souple dans la suite du texte.

L'ensemble d'au moins un bloc de matériau souple assure le maintien de l'enroulement à distance du circuit magnétique en tout point de l'enroulement.

L'ensemble d'au moins un bloc de matériau souple assure également la fixation de l'enroulement sur le circuit magnétique.

Ainsi, selon l'invention, un matériau souple est utilisé comme interface de liaison entre le circuit magnétique et chaque enroulement. CE matériau assure un découplage vibratoire entre le circuit magnétique et chaque enroulement. Autrement dit, ce matériau souple permet de filtrer les vibrations transmises du circuit magnétique (source de vibration) aux enroulements (éléments de forte émissivité acoustique). Cette solution permet par conséquent également de réduire les vibrations transmises au reste du convertisseur et à l'extérieur du convertisseur car c'est par les enroulements que sont fixées les inductances d'interphase. Les éléments fortement émissifs d'un point de vue acoustique ne sont plus mis en vibration par la vibration du circuit magnétique.

L'inductance d'interphase de cette solution présente l'avantage d'être compacte et de pouvoir être intégrée dans des convertisseurs AC/DC de l'art antérieur sans en changer l'agencement.

Cette solution permet de conserver un montage classique de l'inductance d'interphase sur les autres éléments du convertisseur AC/DC via les enroulements et permet d'éviter l'utilisation d'amortisseurs vibratoires entre les enroulements de l'inductance d'interphase et ces autres éléments. Cette solution permet d'éviter l'utilisation de tresses conductrices pour relier l'électriquement les enroulements aux redresseurs et à la sortie du convertisseur AC/DC. Cette solution est avantageuse en gain de volume et de coût. On utilise en réalité le circuit magnétique et chaque enroulement comme étant les deux parties rigide d'un amortisseur.

Cette solution présente également l'avantage de ne pas entraîner de changement du fonctionnement électrique du convertisseur par rapport aux solutions de l'art antérieur.

La figure 4 représente le niveau de bruit acoustique émis par une inductance d'interphase en fonction de la fréquence pour une inductance d'interphase de l'art antérieur en trait continu et pour une inductance d'interphase selon l'invention en traits pointillés. La solution proposée permet une réduction du niveau de bruit acoustique comprise entre 5dB et 15dB selon la fréquence électrique.

Chaque enroulement 43, 53 est fixé à la branche B1 ou B2 à laquelle il est enroulé, et de préférence au circuit magnétique, uniquement au moyen de la colle. Cela permet d'assurer le découplage en vibrations acoustiques entre l'enroulement et la branche B1 ou B2. En revanche, cela rend l'enroulement plus fragile vis-à-vis de la manutention de l'inductance d'interphase. Par ailleurs, la fabrication du dispositif est plus longue et fastidieuse que dans l'art antérieur.

Avantageusement, l'inductance d'interphase est dépourvue d'un vernis ou d'une résine dans lequel sont noyés à la fois les enroulements et le circuit magnétique commun. Cela permet d'éviter de perdre l'avantage obtenu par le découplage en vibrations acoustiques obtenu par la colle et d'éviter une éventuelle détérioration de la colle par réaction chimique entre le vernis et la colle.

Avantageusement, comme représenté sur la figure 2b, les blocs de matériau souple 46, 47, 56, 57 sont disposés uniquement à proximité d'extrémités longitudinales de ses branches B1 et B2. Cette position permet une bonne stabilité mécanique et est facile d'accès pour venir appliquer la colle.

En variante et/ou en sus, au moins un bloc de matériau souple est disposé à proximité du centre d'une branche.

Chacun des blocs 46, 47, 56, 57 entoure, par exemple, complètement la branche B1 ou B2 correspondante. Cela permet de garantir un espacement entre l'enroulement enroulé autour de la branche et la branche sur toute la périphérie de la branche. Les blocs 46, 47, ou 56, 57 sont, par exemple, espacés selon l'axe longitudinal x1 ou respectivement x2 de la branche B1 ou respectivement B2. En d'autres termes, les blocs 46 et 47 sont espacés le long de l'axe longitudinal x1 de la première branche B1 et les blocs 56 et 57 sont espacés le long de l'axe longitudinal x2 de la deuxième branche B2. Le circuit magnétique subit des pertes thermiques qu'il faut dissiper par convection (l'air vient extraire les calories). La colle est un isolant thermique, cet espacement permet d'éviter une surchauffe du circuit magnétique. Par ailleurs, cela permet de limiter la raideur de la liaison entre le circuit magnétique et l'enroulement et favorise donc le découplage vibratoire entre ces éléments ou repousse la fréquence de coupure (fréquence à partir de laquelle le découplage devient performant) vers les hautes fréquences. Autrement dit, l'ensemble d'au moins un bloc, assurant le maintien d'un enroulement à distance du circuit magnétique en tout point d'un enroulement, comprend plusieurs blocs. L'ensemble de blocs comprend des blocs distants les uns des autres selon l'axe de la branche autour de laquelle est réalisé l'enroulement.

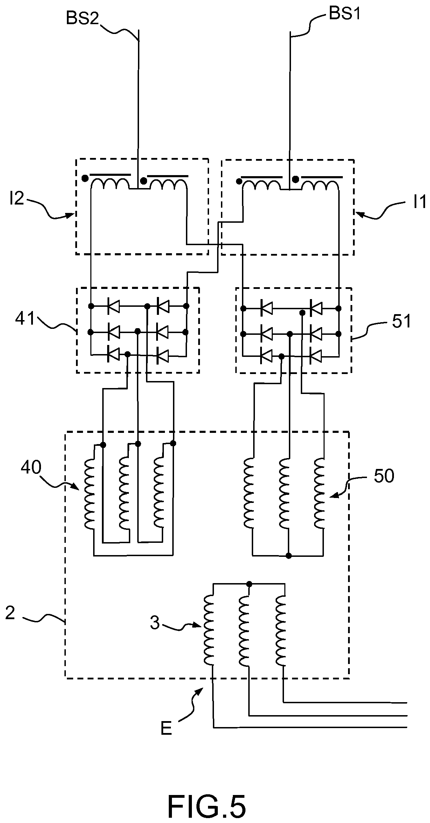

Il est à noter que l'invention se rapporte à un convertisseur du type de celui représenté sur la figure 5 dans lequel chaque redresseur comprend une première sortie reliée à la première borne de sortie BS1 par l'intermédiaire d'une première inductance d'interphase I1 et qui diffère du convertisseur de la figure 2 en ce qu'une deuxième sortie de chaque redresseur est reliée à la deuxième borne de sortie BS2 par l'intermédiaire d'une deuxième inductance d'interphase I2. Tout comme l'inductance I, ces inductances comprennent un circuit magnétique commun et deux enroulements réalisés autour de deux branches longitudinales parallèles du circuit magnétique de sorte à former deux bobines pouvant être montées sur le circuit magnétique comme décrit précédemment par l'ensemble d'au moins un bloc d'un matériau souple.

Les bobines des inductances d'interphase I1 et I2 sont reliées en série et un point milieu reliant ces bobines est relié à la borne de sortie correspondante BS1 ou BS2.

L'invention se rapporte également à un procédé de fabrication d'un convertisseur AC/DC selon l'invention.

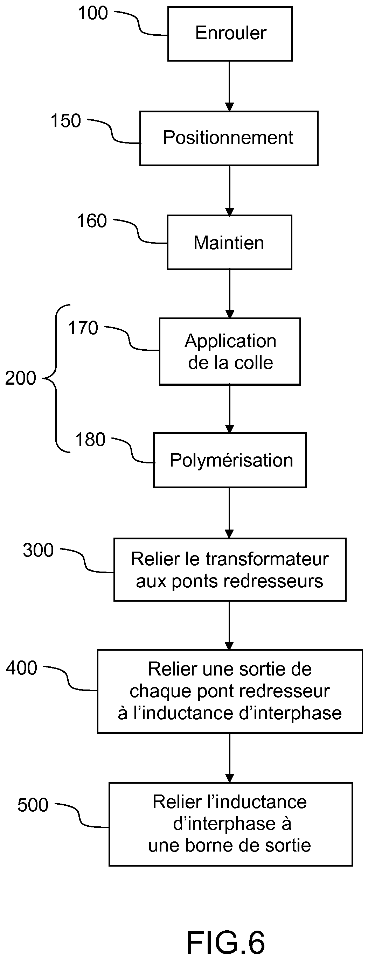

Comme représenté sur la figure 6, le procédé comprend les étapes suivantes, pour chaque enroulement :
- une étape 100 d'enroulement d'un élément conducteur autour de la branche pour former l'enroulement de sorte que l'enroulement soit apte à être maintenu à distance du circuit magnétique en tout point de l'enroulement, et notamment de la branche autour de laquelle il est enroulé,
- une étape de formation 200 de l'ensemble d'au moins un bloc de maintien fixé au circuit magnétique,
- une étape de disposition 150 de l'enroulement par rapport au du circuit magnétique de sorte que l'ensemble d'au moins un bloc de maintien maintienne l'enroulement à distance du circuit magnétique en tout point de l'enroulement.

Le procédé comprend également les étapes suivantes :
- relier 300 chaque secondaire du transformateur à l'entrée d'un des deux ponts redresseur,
- relier 400 une sortie de chaque pont redresseur à l'inductance d'interphase,
- relier 500 l'inductance d'interphase à une des bornes de sortie du convertisseur.

Avantageusement, l'étape consistant à relier chaque sortie de chaque pont redresseur à l'inductance d'interphase consiste à relier électriquement et mécaniquement la sortie du pont redresseur à l'inductance d'interphase. Cette liaison s'effectue avantageusement uniquement via un des enroulements de l'inductance d'interphase.

Avantageusement, l'étape consistant à relier l'inductance d'interphase à une des bornes de sortie du convertisseur consiste à relier électriquement et mécaniquement la borne de sortie à l'inductance d'interphase. Cette liaison s'effectue avantageusement uniquement via les enroulements de l'inductance d'interphase.

Dans le procédé représenté sur la figure 6, l'étape de positionnement 150 est ultérieure à l'étape d'enroulement 100.

Le procédé comprend une étape de maintien 160 de l'enroulement par rapport au circuit magnétique dans la position relative de l'étape 150.

Les étapes de positionnement et de maintien sont réalisées à l'aide d'un outillage.

L'étape 200 de formation de l'ensemble d'au moins un bloc est ultérieure à l'étape de positionnement 150. Elle est mise en œuvre alors que l'enroulement et le circuit magnétique sont maintenus dans la position relative.

Avantageusement, l'ensemble d'au moins un bloc assure la fixation de l'enroulement par rapport au circuit magnétique par collage.

Les étapes de positionnement et de maintien des enroulements par rapport aux deux branches parallèles du circuit magnétique commun peuvent être une même étape.

Avantageusement, les étapes de formation les ensembles de blocs destinés à assurer le maintien des deux enroulements sont une même étape.

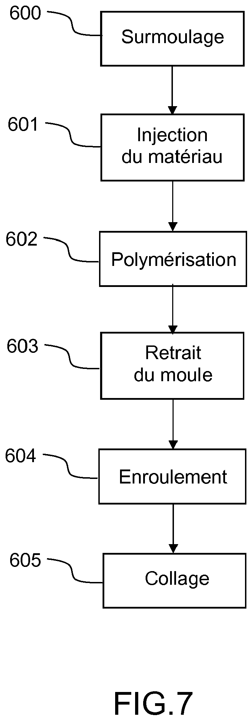

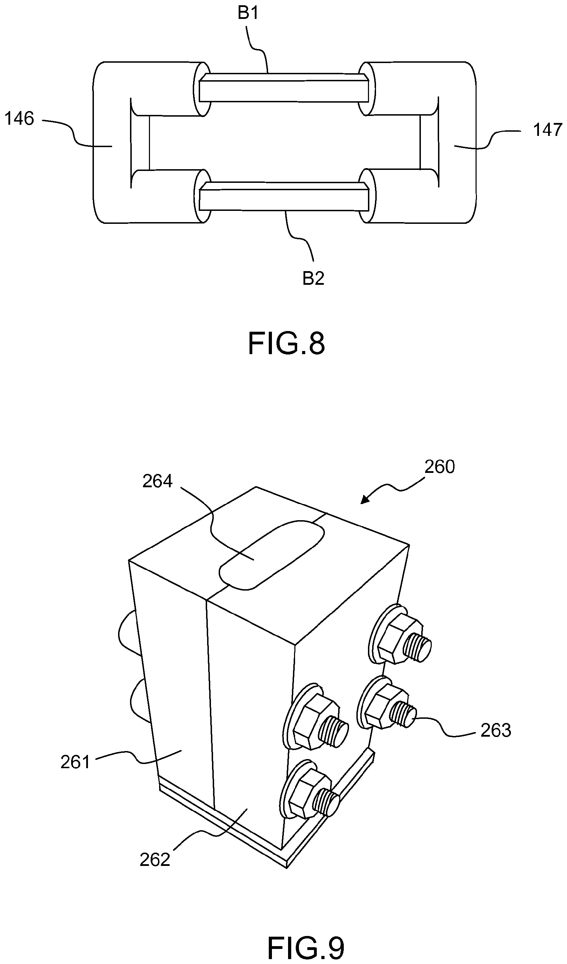

En variante, le procédé de fabrication comprend les étapes suivantes représentées schématiquement sur la figure 7 :
- une étape de surmoulage 600 du noyau magnétique 60 au moyen d'un moule 2 60 représenté sur la figure 9 entourant le noyau magnétique 60 et définissant au moins un volume libre dans lequel est destiné à se trouver ledit au moins un bloc de colle,
- une étape d'injection 601 du matériau dans le volume libre, le matériau étant par exemple une colle,
- une éventuelle étape de polymérisation de la colle 602, un exemple circuit magnétique 60 muni des blocs ainsi formés est représenté sur la figure 9,
- une étape de retrait du moule 603 de façon à sortir le noyau magnétique muni dudit au moins un bloc de colle du moule,
- suivie de l'étape d'enroulement 604 pour former l'enroulement autour de la branche de sorte que l'ensemble d'au moins un bloc de maintien assure le maintien 605 de l'enroulement à distance du circuit magnétique.

Dans ce procédé, l'étape de formation de l'ensemble d'au moins un bloc comprend l'étape d'injection du matériau et l'éventuelle étape de polymérisation.

Cette étape est suivie de l'étape de positionnement de l'enroulement par rapport au circuit magnétique pour que l'ensemble d'au moins un bloc assure son maintien à distance du circuit magnétique en tout point de l'enroulement. Cette étape est aussi l'étape de réalisation de l'enroulement.

Avantageusement, les blocs sont configurés de sorte à assurer le maintien de l'enroulement fixe en translation selon l'axe de la branche par rapport au circuit magnétique. Ils forment avantageusement des butées pour empêcher un mouvement de l'enroulement par rapport au circuit magnétique selon l'axe de la branche.

Ce procédé présente l'avantage d'être plus reproductible que le premier procédé mais plus long à mettre en œuvre, la polymérisation de la colle dans le moule étant plus longue qu'à l'air libre.

Comme visible sur la figure9, le moule 260 comprend deux parties séparables 261 et 262 fixées l'une à l'autre par des moyens d'attache2163 de sorte à définir le ou les volume(s) libre(s) destiné(s) à recevoir un ou des blocs de matériau souple. Le moule 160 comprend au moins une ouverture 264 par laquelle la colle est destinée à être injectée dans le moule. Dans l'exemple des figures 8 et 9, le moule comprend deux ouvertures, dont une seule est visible sur la figure 9. Ces ouvertures sont ménagées au niveau des extrémités longitudinales du moule 160 de sorte à permettre de former les deux blocs de colle 146 et 147 aux extrémités longitudinales des branches B1 et B2 visibles sur la figure 8.

Les blocs 146 et 147 sont espacés selon les axes longitudinaux des branches B1 et B2 ce qui signifie que le moule 260 définit deux volumes ne communiquant pas l'un avec l'autre débouchant chacune sur une seule des deux ouvertures, les volumes étant distants l'une de l'autre les axes longitudinaux des branches B1 et B2.

Dans la réalisation de la figure 8, le circuit magnétique est muni de deux blocs de matériau souple 146 et 147. Chaque bloc de matériau souple 146, 147 entoure complètement les deux branches B1 et B2 de sorte à permettre d'assurer le maintien des deux enroulements à distance du circuit magnétique et notamment des branches. Ce maintien est réalisé lorsque l'enroulement vient en appui sur les blocs. Les blocs 146 et 147 forment des butées radiales permettant d'empêcher un mouvement radial de chaque enroulement selon un axe radial à l'axe longitudinal de sa branche.

Avantageusement, les blocs de matériau sont configurés et disposés de sorte à maintenir les enroulements fixes par rapport au circuit magnétique selon les axes longitudinaux des branches. Ainsi les blocs 146 et 147 entourent avantageusement complètement les petites branches B3 et B4 reliant les grandes branches entre elles.

Avantageusement, chaque bloc 146, 147 est disposé à une des extrémités des branches B1 et B2.

## Revendications

1. Convertisseur AC/DC (1) comprenant une entrée du convertisseur AC/DC destinée à recevoir une tension alternative triphasée d'entrée et à la transformer en une tension continue, le convertisseur AC/DC (1) comprenant un transformateur (2) destiné à recevoir la tension alternative triphasée d'entrée et à délivrer deux tensions alternatives triphasées de sortie sur deux secondaires respectifs (40, 50), le convertisseur AC/ DC (1) comprenant un ensemble de deux ponts redresseurs (41, 51), chaque secondaire (40, 50) étant relié en entrée d'un des deux ponts redresseurs (41, 51) de l'ensemble, chaque pont redresseur (41, 51) de l'ensemble de ponts redresseurs comprenant une première sortie reliée à une borne de sortie du convertisseur AC/DC (1) par une inductance d'interphase (I), l'inductance d'interphase (I) comprenant un circuit magnétique (60) comprenant deux branches (B1, B2) sensiblement parallèles et deux enroulements, chaque enroulement étant enroulé autour d'une branche, prise parmi les deux branches (B1, B2), et étant maintenu à distance du circuit magnétique (60), en tout point de l'enroulement, au moyen d'un ensemble d'au moins un bloc de maintien en un matériau ayant une dureté shore A inférieure ou égale à 50.

2. Convertisseur AC/DC selon la revendication précédente, dans lequel l'enroulement est fixé à la branche au moyen de l'ensemble d'au moins un bloc de maintien.

3. Convertisseur AC/DC selon l'une quelconque des revendications précédentes, dans lequel l'enroulement est fixé à la branche uniquement au moyen de l'ensemble d'au moins un bloc de maintien.

4. Convertisseur AC/DC selon l'une quelconque des revendications précédentes, dans lequel l'ensemble d'au moins un bloc comprend plusieurs blocs espacés selon un axe longitudinal selon lequel la branche s'étend longitudinalement.

5. Convertisseur AC/DC selon l'une quelconque des revendications précédentes, dans lequel le matériau est une colle.

6. Convertisseur AC/DC selon l'une quelconque des revendications précédentes, dans lequel le transformateur (2) comprend un primaire en entrée duquel il est destiné à recevoir la tension alternative triphasée d'entrée.

7. Procédé de fabrication d'un convertisseur AC/DC selon l'une quelconque des revendications précédentes, comprenant les étapes suivantes pour chaque enroulement :
- une étape d'enroulement pour former l'enroulement autour de la branche de sorte que l'enroulement soit apte à être maintenu à distance du circuit magnétique en tout point de l'enroulement,
- une étape de formation de l'ensemble d'au moins un bloc de maintien fixé au circuit magnétique,
- une étape de disposition de l'enroulement par rapport au du circuit magnétique de sorte que l'ensemble d'au moins un bloc de maintien maintienne l'enroulement à distance du circuit magnétique en tout point de l'enroulement.

8. Procédé de fabrication selon la revendication précédente, dans lequel le matériau est une colle.

9. Procédé de fabrication selon la revendication précédente, comprenant une étape de positionnement de l'enroulement et du circuit magnétique dans une position relative dans laquelle l'enroulement est située à distance du circuit magnétique en tout point de l'enroulement, suivie d'une étape d'application de la colle entre l'enroulement et la branche et une étape de polymérisation de la colle de sorte à former l'ensemble d'au moins un bloc de maintien.

10. Procédé de fabrication selon la revendication 7, comprenant une étape d'injection du matériau dans un moule entourant le circuit magnétique et définissant au moins un volume libre dans lequel est destiné à se trouver l'ensemble d'au moins un bloc de maintien, l'étape d'injection du matériau étant suivie d'une étape de retrait du moule suivie de l'étape d'enroulement.
